# EUROPEAN PATENT SPECIFICATION

(11) **EP 1 757 067 B1**
(45) Date of publication and mention of the grant of the patent: **09.03.2011**
(21) Application number: 05760884.6
(22) Date of filing: 13.05.2005
(51) Int. Cl.: H04L 29/06, G06F 15/80

(54) **Method and apparatus to manage heterogeneous cryptographic operations**
Verfahren und Vorrichtung zur Verwaltung von heterogenen kryptographischen Operationen
Procédé et dispositif de gestion d'operations cryptographiques hétérogènes

(30) Priority: 14.06.2004 US 868296
(43) Date of publication of application: 28.02.2007
(73) Proprietor: Intel Corporation, Santa Clara, CA 95052 (US)
(72) Inventor: NEOGI, Raja, Portland, OR 97229 (US)
(74) Representative: Hutchinson, Glenn Stanley
(86) International application number: PCT/US2005/016560
(87) International publication number: WO 2006/001917

(56) References cited:
- WO-A-01/05086
- WO-A-03/088072
- KALOGERAKI V ET AL: "Using multiple feedback loops for object profiling, scheduling and migration in soft real-time distributed object systems" OBJECT-ORIENTED REAL-TIME DISTRIBUTED COMPUTING, 1999. (ISORC '99). PROCEEDINGS. 2ND IEEE INTERNATIONAL SYMPOSIUM ON SAINT-MALO, FRANCE 2-5 MAY 1999, LOS ALAMITOS, CA, USA,IEEE COMPUT. SOC, US, 2 May 1999 (1999-05-02), pages 291-300, XP010340611 ISBN: 0-7695-0207-5
- WU L ET AL: "CryptoManiac: a fast flexible architecture for secure communication" PROCEEDINGS OF THE 28TH. INTERNATIONAL SYMPOSIUM ON COMPUTER ARCHITECTURE. ISCA 2001. GOTEBORG, SWEDEN, JUNE 30 - JULY 4, 2001, INTERNATIONAL SYMPOSIUM ON COMPUTER ARCHITECTURE.(ISCA), LOS ALAMITOS, CA, IEEE COMP. SOC, US, 30 June 2001 (2001-06-30), pages 104-113, XP010553867 ISBN: 0-7695-1162-7

## Description

A media computer or set top box (STB) may provide various functions for an entertainment system, such as a television system. For example, the media computer may receive and decode audio/video signals for display on the television. The media computer, however, may be connected to various media sources, each with their own cryptography requirements. Consequently, the media computer may need to operate in accordance with multiple cryptographic techniques. Accordingly, there may be a need for improvements in accommodating such techniques in a device or network.
WO 03/088072 describes a system whereby a packet is processed by encapsulating the packet with a packet-object header if the packet does not have a packet-object header. The encapsulated packet is processed based on information contained in the packet-object header using a plurality of transform modules that are coupled to each other in a series of pipeline configuration. The plurality of transform modules process the encapsulated packet independent of each other.
WO 01/05086 describes an architecture for cryptography accelerator chip that enables parallel processing of packets through a plurality of cryptography engines and includes a classification engine configured to process encryption/decryption of data packets.
Document XP010553867 discloses combining CryptoManiac processors into parallel configurations which allows to scale cryptographic performance for applications with inter-session and inter-packet parallelism.

### BRIEF DESCRIPTION OF THE DRAWINGS

FIG. 1 illustrates a block diagram of a system 100.

FIG. 2 illustrates a block diagram of a system 200.

FIG. 3 illustrates a block diagram of a system 300.

FIG. 4 illustrates a data structure 400.

FIG. 5 illustrates a data structure 500.

FIG. 6 illustrates a block flow diagram 600. 20

FIG. 7 illustrates a block flow diagram 700.

### DESCRIPTION OF SPECIFIC EMBODIMENTS

The present invention is defined by the subject matter of the appended claims.

Preffered embodiments are defined by the dependent claims.

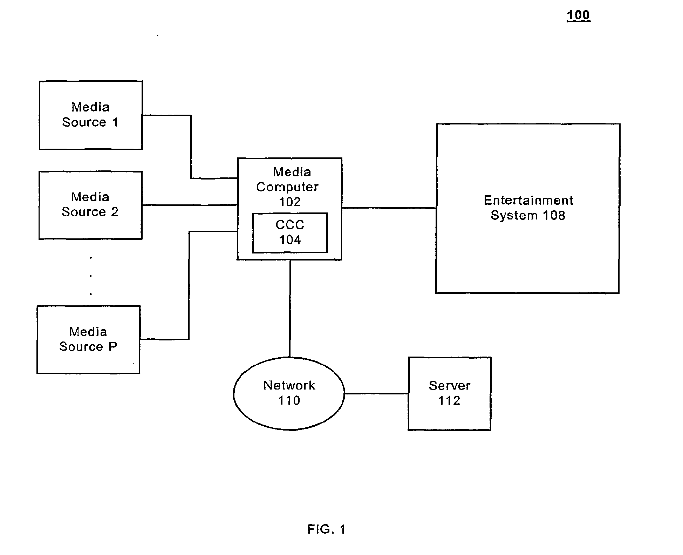

FIG. 1 illustrates a block diagram of a system 100. System 100 may comprise a communication system to communicate information between multiple nodes. A node may comprise any physical or logical entity having a unique address in system 100. The unique address may comprise, for example, a network address such as an Internet Protocol (IP) address, device address such as a Media Access Control (MAC) address, and so forth.

In some embodiments, one or more communications media may connect the nodes. A communications medium may comprise any medium capable of carrying information signals. Examples of communications media may include metal leads, semiconductor material, twisted-pair wire, co-axial cable, fiber optic, radio frequencies (RF) and so forth. The terms "connection" or "interconnection," and variations thereof, in this context may refer to physical connections and/or logical connections.

The nodes of system 100 may be arranged to communicate different types of information, such as media information and control information. Media information may refer to any data representing content meant for a user, such as voice information, video information, audio information, text information, alphanumeric symbols, graphics, images, and so forth. Control information may refer to any data representing commands, instructions or control words meant for an automated system. For example, control information may be used to route media information through a system, or instruct a node to process the media information in a predetermined manner.

As shown in FIG. 1, system 100 may comprise media sources 1-P, a media computer 102, and an entertainment system 108. Media computer 102 may comprise a cryptography context controller (CCC) 104. Media computer 102 may be connected to a server 112 via network 110. Although FIG. 1 shows a limited number of nodes, it can be appreciated that any number of nodes may be used in system 100. The embodiments are not limited in this context.

In some embodiments, system 100 may comprise media sources 1-P. Media sources 1-P may comprise any source capable of delivering audio signals, video signals, or audio/video (A/V) signals, to an entertainment system, such as entertainment system 108. An example of a media source may include a source for A/V signals such as television signals. The media source may be arranged to source or deliver standard analog television signals, digital television signals, high definition television (HDTV) signals, and so forth. The television signals may include various types of information, such as television audio information, television video information, and television control information. The television video information may include content from a video program, computer generated images (CGI), and so forth. The television audio information may include voices, music, sound effects, and so forth. The television control information may be embedded control signals to display the television video and/or audio information, commercial breaks, refresh rates, synchronization signals, and so forth. Another example of a media source may include a source for audio signals. The audio source may be arranged to source or deliver standard audio information, such as analog or digital music. Another example of a media source may include a source for video signals, such as from a computer to a display. Other examples of media source 1-P may include a digital camera, A/V camcorder, video surveillance system, teleconferencing system, telephone system, medical and measuring instruments, and other sources needing image and audio processing operations. The embodiments are not limited in this context.

In some embodiments, media sources 1-P may originate from a number of different devices or networks. For example, media sources 1-P may include a device arranged to deliver pre-recorded media stored in various formats, such as a Digital Video Disc (DVD) device, a Video Home System (VHS) device, a digital VHS device, a computer, a gaming console, a Compact Disc (CD) player, and so forth. In yet another example, media sources 1-P may include multimedia distribution systems to provide broadcast or streaming analog or digital television or audio signals to media computer 102. Examples of multimedia distribution systems may include, for example, Over The Air (OTA) broadcast systems, terrestrial cable systems (CATV), satellite broadcast systems, and so forth. The types and locations of media sources 1-P are not limited in this context.

In some embodiments, system 100 may comprise entertainment system 108. Entertainment system 108 may comprise any system arranged to reproduce one or more television signals, audio signals, or video signals, received from media sources 1-P. An example of entertainment system 108 may include any television system having a display and speakers. Another example of entertainment system 108 may include an audio system, such as a receiver or tuner connected to external speakers. Yet another example of entertainment system 108 may include a computer having a display and speakers. The embodiments are not limited in this context.

In some embodiments, system 100 may comprise media computer 102. Media computer 102 may comprise a processing system arranged to implement various operations using software executed by a processor, hardware circuits or structures, or a combination of hardware and software, as desired for a particular implementation. In some embodiments, for example, media computer 102 may comprise a personal computer (PC) or STB arranged to manage media information and control information for the various nodes of system 100. Media computer 102 may be connected to media sources 1-P and entertainment system 108. Media computer may have a number of standard input/output (I/O) devices, such as a keyboard, mouse, display, printer, and so forth. The connections may include various wired or wireless communications media and the appropriate I/O adapters, as desired for a given implementation. The embodiments are not limited in this context.

In some embodiments, media computer 102 may be connected to a server 112 via a network 110. An example of network 110 may include a data network, such as a network operating in accordance with one or more Internet protocols, such as the Transport Control Protocol (TCP) and Internet Protocol (IP). Server 112 may comprise a computer or workstation to deliver content to media computer 102, such as a web server arranged to deliver Hypertext Markup Language (HTML) or Extensible Markup Language (XML) documents via the Hypertext Transport Protocol (HTTP), for example. The embodiments are not limited in this context.

It is worthy to note that although media computer 102 and entertainment system 108 are shown in FIG. 1 as separate systems for purposes of clarity, it may be appreciated that these two systems may be implemented in a single integrated system. An example of such an integrated system may comprise a digital television having a processor and memory. The embodiments are not limited in this context.

In some embodiments, media computer 102 may include CCC 104. CCC 104 may manage and perform various cryptographic operations for media computer 102. In many cases, media computer 102 may receive the various signals from media sources 1-P in an encrypted format. The encryption may be performed in accordance with a number of different cryptography techniques. Examples of cryptography techniques may include a Data Encryption Standard (DES), Triple DES, MULTI-2, Advanced Encryption System (AES), Fast Data Encipherment Algorithm (FEAL), MISTY, ENCRiP, and so forth. Similarly, content from server 112 may be delivered to media computer 102 via network 110 in an encrypted format, such as IPSec, Secure HTTP (SHTTP), Secure Socket Layer (SSL), and so forth.

In some embodiments, the cryptography techniques may include various block cipher algorithms. A block cipher may be asymmetric or symmetric. A symmetric block cipher may use the same key for encryption and decryption. An asymmetric block cipher may use difference keys for encryption and decryption. A block cipher may encrypt a block of plain text into a block of cipher text of the same size. The block may be defined to include any given number of bits. Consequently, all block ciphers have a natural block size that comprises the number of bits they encrypt in a single operation. This stands in contrast to stream ciphers, which encrypt one bit at a time. Any block cipher can be operated in one of several modes, such as Electronic Code Book (ECB) mode, Cipher Block Chaining (CBC) mode, Output Feedback (OFB) Mode, and so forth. The embodiments are not limited in this context.

The presence of varying cryptography techniques may potentially require a device to perform different sets of cryptographic operations. For example, each cryptography technique may use different types of keys, key size, key storage, key update frequency, and so forth. In addition, each cryptography technique may vary in cryptographic context, that is, they may be used for a number of different types of applications and environments. Examples of different cryptography contexts may include decrypting streaming audio/video signals, storage encryption/decryption, re-encryption for distribution in a home network or for communicating content on an open bus structure, and so forth. Consequently, the combination of heterogeneous cryptographic techniques and heterogeneous cryptographic contexts may increase the complexity in managing cryptographic operations.

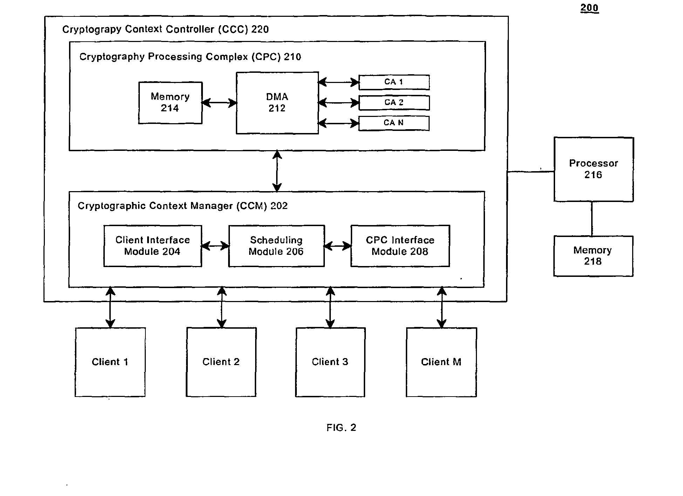

CCC 104 may be arranged to manage and perform different cryptographic operations for various clients of media computer 102, to include media sources 1-P and server 112, for example. CCC 104 may support multiple cryptography contexts from various clients, such as media sources 1-P. CCC 104 may switch the context, control and configuration for each active flow from a client based on a dynamic resource allocation policy. CCC 104 may have access to a direct memory access (DMA) controller, reconfigurable cryptography engine, and various register banks. The control structure may be subjected to lossless compression to reduce dynamic loading latency. Media computer 102 in general, and CCC 104 in particular, may be discussed in more detail with reference to FIG. 2.

FIG. 2 illustrates a system 200. In some embodiments, system 200 may be representative of, for example, a system or sub-system for media computer 102. As shown in FIG. 2, system 200 may comprise a CCC 220 connected to clients 1-M, a processor 216, and a memory 218. CCC 220 may comprise a cryptographic context manager (CCM) 202 and a cryptography processing complex (CPC) 210. CCM 202 may comprise a client interface module 204, a scheduling module 206, and a CPC interface module 208. CPC 210 may comprise a direct memory access (DMA) 212, a memory 214, and cryptographic accelerators (CA) 1-N. Although a limited number of elements are shown as part of system 200, it may be appreciated that system 200 may comprise any number of additional elements. The embodiments are not limited in this context.

In some embodiments, system 200 may comprise processor 216. Processor 216 can be any type of processor capable of providing the speed and functionality desired for an embodiment. For example, processor 216 could be a processor made by Intel® Corporation and others. Processor 216 may also comprise a digital signal processor (DSP) and accompanying architecture. Processor 216 may further comprise a dedicated processor such as a network processor, embedded processor, micro-controller, controller and so forth. The embodiments are not limited in this context.

In some embodiments, system 200 may have various types of memory, such as memory 218 accessible to processor 216, and memory 214 accessible to DMA 212. Memory 214 and memory 218 may comprise any machine-readable media capable of storing program instructions and data adapted to be executed by a processor. Some examples of machine-readable media include, but are not limited to, read-only memory (ROM), random-access memory (RAM), dynamic RAM (DRAM), double DRAM (DDRAM), static RAM (SRAM), programmable ROM, erasable programmable ROM, electronically erasable programmable ROM, dynamic RAM, magnetic disk (e.g., floppy disk and hard drive), optical disk (e.g., CD-ROM) and any other media that may store digital information. Further, media computer 200 may contain various combinations of machine-readable storage devices through various I/O controllers, which are accessible by a processor and which are capable of storing a combination of computer program instructions and data. Although FIG. 2 illustrates memory 214 and memory 218 as physically separate non-contiguous memories, it may be appreciated that memory 214 and memory 218 may comprise a contiguous set of physical memory separated into one or more logical partitions, using the same or different physical and logical addressing schemes. The embodiments are not limited in this context.

In some embodiments, the term "program instructions" may include computer code segments comprising words, values and symbols from a predefined computer language that, when placed in combination according to a predefined manner or syntax, cause a processor to perform a certain function. Examples of a computer language may include C, C++, JAVA, assembly, micro-code for a network processor, and so forth. The instructions may be stored on the media in a compressed and/or encrypted format. As used herein, the phrase "adapted to be executed by a processor" is meant to encompass instructions stored in a compressed and/or encrypted format, as well as instructions that have to be compiled or installed by an installer before being executed by processor 216.

In some embodiments, CCC 200 may include one or more clients 1-M. A client may comprise any entity or agent requesting cryptographic operations, such as media sources 1-P. Examples of clients 1-M may include a conditional access agent, a digital transport control protocol agent, a digital video disc agent, and a local storage agent. Clients 1-M may each use the same or different cryptographic techniques to encrypt/decrypt one or more context flows communicated by or through clients 1-M. An example of a context flow may include any active synchronous or asynchronous data stream associated with clients 1-M, or a connection between clients 1-M. An active data stream may refer to any open communication connection or communication session that has not been terminated or timed out. A context flow may be identified in a number of different ways, such as by a context parameter, a client identifier, and so forth. The type and duration of each flow of information may vary according to implementation, and the embodiments are not limited in this context.

In some embodiments, CCC 220 may include CCM 202. CCM 202 may be connected to CPC 210. CCM 202 may be a system arranged to manage execution of multiple context flows by a cryptography processing system, such as CPC 210. The multiple context flows may originate from a single client, or may originate from multiple clients. In some embodiments, the multiple context flows may use different cryptographic techniques. For example, the multiple context flows may include a first context flow to be processed in accordance with a first set of cryptography operations, and a second context flow to be processed in accordance with a second set of cryptography operations. The number of context flows may vary according to an amount of resources for a given implementation, and the embodiments are not limited in this context.

In some embodiments, CCM 202 may comprise a plurality of elements, such as client interface module 204, scheduling module 206, and CPC interface module 208. A module may comprise, for example, one or more circuits, components, registers, processors, software subroutines, or any combination thereof. Although CCM 202 includes only a limited number of modules, it can be appreciated that any number of modules may be used in CCM 202. The embodiments are not limited in this context.

In some embodiments, CCM 202 may include client interface module 204. One or more clients 1-M may send a request for cryptography services to CCC 220. Clients 1-M may initiate a connection or communication session with CCC 220 by passing a context parameter or client identifier to client interface module 204. Client interface module 204 may receive the request and may perform authentication operations to confirm the identity of the client requesting access to the cryptography services of CCC 220. The authentication operation may be performed once for each session, for example.

Once the client is authenticated, client interface module 204 may determine whether CPC 210 is capable of performing the cryptographic operations for the client and/or the context flow. Client interface module 204 may retrieve a set of client resource parameters associated with the client. Client interface module 204 may retrieve a set of system resource parameters associated with cryptographic accelerators 1-N of CPC 210. Client interface module 204 may determine whether to perform the cryptographic operations for the client using the client resource parameters and the system resource parameters.

In some embodiments, the client resource parameters may comprise parameters that assist in defining the amount of resources needed to service the request. Examples of client resource parameters may include a client bandwidth parameter and context parameter. The client bandwidth parameter may represent an amount of bandwidth requested by the client. The requested bandwidth may include a bit rate, which is typically represented in bits or bytes per second. The context parameter may represent a type of operation requested by the client, such as encryption or decryption. The context parameter may also represent an operating environment, such as a home network, office network, public network, and so forth. The context parameter may also represent a type of device requesting service, such as a computer, DVD player, gaming console, CD player, and so forth. The client resource parameters may be embedded with a client request. Client interface module 204 may also retrieve client resource parameters from a service level agreement (SLA) associated with each client stored in memory 214 or 218.

In some embodiments, the system resource parameters may comprise parameters that assist in defining the amount of resources available to service the request. Examples of system resource parameters may include a system bandwidth parameter, cryptography bandwidth parameter, a memory bandwidth parameter, available DMA channels parameter, stream logistics parameter, and so forth. The system resource parameters may be retrieved from CPC 210 via CPC interface module 208.

In some embodiments, client interface module 204 may compare the processing requirements associated with the client request with the available system resources. Requests for service may be denied if only part of a client's cryptographic needs can be met. If client interface module 204 determines that there are sufficient available system resources for CPC 210 to service the request, client interface module 204 may grant the request and admit the context flow for processing by CPC 210. A context flow identifier or client identifier may be passed to scheduling module 206. Client interface module 204 may send additional information associated with the admitted context flow, such as a key for the cryptographic technique, the bit rate, and so forth. For example, client interface module 204 may perform key-calculation for a cryptographic technique. Client interface module 204 may perform key-calculation once for each logical sector or execution context. The bit rate for each admitted context flow may be used, for example, to track real-time deadlines by scheduling module 206.

In some embodiments, CCM 202 may include scheduling module 206. Scheduling module 206 may be arranged to assign the multiple context flows to one or more cryptographic accelerators 1-N. Scheduling module 206 may generate a schedule for each cryptographic accelerator 1-N to process the multiple context flows. Scheduling module 206 may also operate to ensure that the execution context is logical sector aligned to assist client interface module 204 in performing key-calculations.

In some embodiments, scheduling module 206 may receive the admitted context flow from client interface module 204, and assigns it to one of cryptographic accelerators 1-N. Once assigned, scheduling module 206 may add the context flow to a list of context flows ready for execution by the cryptographic accelerator ("ready list"). Scheduling module 206 may schedule each context flow for processing by the cryptographic accelerator. The cryptographic accelerator may continuously process blocks of information for the various context flows until a context flow reaches a terminating condition. The terminating condition may comprise, for example, a predetermined number of execution cycles, a context flow times out, a stop directive issued from the requesting client, and so forth. It is worthy to note that it is the ready list that initiates all activity for a cryptographic accelerator. Once a context flow starts receiving cryptography service, DMA 212 may use DMA interrupts to ensure continuous operation until a context flow is terminated.

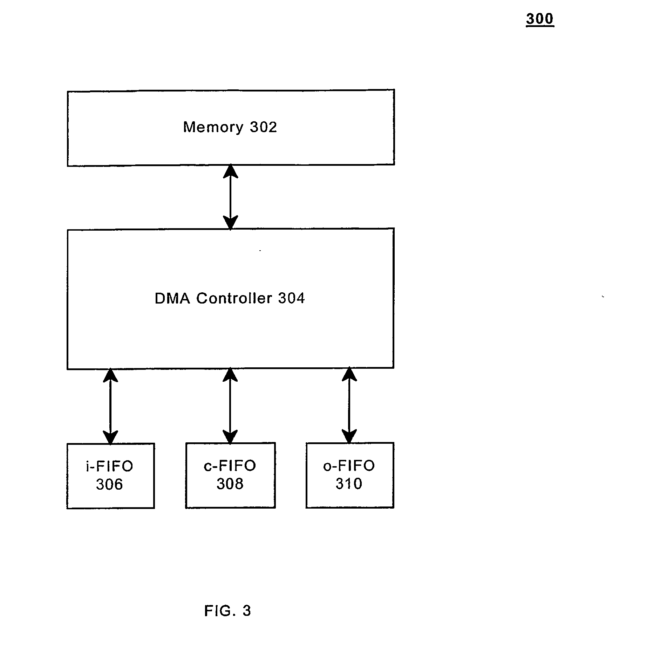

Scheduling module 206 is responsible for scheduling each context flow for processing by CPC 210. Scheduling module 206 switches the context, control, and configuration, for each active context flow on a block-by-block basis in accordance with a dynamic resource allocation policy. The dynamic resource allocation policy includes a set of rules directed to efficient use of resources for CPC 210, thereby allowing CPC 210 to process multiple context flows within execution deadlines for each context flow, while also reducing latency and idle times for DMA 212 and cryptographic accelerators 1-N. Scheduling module 206 may be discussed in more detail with reference to FIGS. 3-6.

In some embodiments, CCM 202 may include CPC interface module 208. CPC interface module 208 arranged to communicate various types of information between CCM 202 and CPC 210, such as media information, control information, configuration information, and so forth. For example, CPC interface module 208 may communicate scheduling information between scheduling module 206 and CPC 210. CPC interface module 208 may also monitor various system resource parameters for CPC 210, and pass such parameters to client interface module 204 for use in admitting new context flows.

In some embodiments, CCC 220 may include CPC 210. CPC 210 may be a system arranged to actually perform the cryptographic operations for multiple context flows. CPC 210 may include DMA 212, memory 214, and multiple cryptographic accelerators 1-N. Although a limited number of elements are shown for CPC 210, it may be appreciated that CPC 210 may comprise additional elements. The embodiments are not limited in this context.

In some embodiments, CPC 210 may include memory 214. Memory 214 may comprise dedicated memory for CCC 220, or a segment of partitioned memory from core system memory 218. Memory 214 may store various types of information for use by CPC 210 in processing blocks of data from active context flows, such as media information, control information, executable code for cryptographic accelerators, context information, configuration information, and so forth.

In some embodiments, CPC 210 may include cryptographic accelerators 1-N. Cryptographic accelerators 1-N may perform different sets of cryptographic operations for different context flows. For example, the multiple cryptographic accelerators may include a first cryptographic accelerator and a second cryptographic accelerator, with the first cryptographic accelerator to perform a first set of cryptographic operations, and the second cryptographic accelerator to perform a second set of cryptographic operations.

The cryptographic accelerators may be implemented in a number of different ways. For example, the cryptographic accelerators may be implemented in hardware (e.g., hardwired gates), software (e.g., micro-coded cores), or some combination of hardware and software. Examples of appropriate software structures for an embodiment may include micro-code for a processor or network processor, firmware, or other lower level code optimized for a given hardware architecture. If a cryptographic accelerator is implemented in software and the cryptographic accelerator needs loading of particular micro-code, the loading should be completed before execution has been initiated. Scheduling module 206 for CCM 202 should be implemented in view of the loading time needed to switch between various contexts.

In some embodiments, CPC 210 may include DMA 212. DMA 212 may comprise a DMA controller and accompanying hardware structures, such as one or more registers or buffers. DMA 212 may arrange the transfer of blocks of information between memory 214 and cryptographic accelerators 1-N in accordance with scheduling information provided by scheduling module 206 via CPC interface module 208. Cryptographic accelerators 1-N may be arranged to perform cryptographic operations using the blocks. DMA 212 may be discussed in more detail with reference to FIG. 3.

In general operation, CCC 220 may perform different sets of cryptography operations for multiple context flows for media computer 102. CPC 210 includes a bank of independently operating cryptographic accelerators 1-N and a multi-channel DMA controller 212 to pull/push required buffers and buffer descriptors from shared memory 214. CCM 202 executes on processor 216 and controls the flow of workload into cryptographic accelerators 1-N. An example of processor 216 may be an Xscale™ (XSC) processor made by Intel Corporation. CCM 202 performs various types of cryptographic control operations, one of which includes performing context aware scheduling to decide which context flow needs to execute and on which cryptographic accelerator. Accordingly, CCM 202 sets up one or more buffer descriptors in memory 214, programs DMA controller 212 for operation, and re-configures cryptographic accelerators 1-N for the next execution phase. CCM 202 also interfaces to the various clients 1-M for setting up communication sessions.

More particularly, a client 1-M may request service by CCC 220 by supplying context parameters to client interface module 204. Client interface module 204 authenticates the client, and either accepts or denies the request based on resource availability. Once a context flow is accepted, scheduling module 206 issue instructions to DMA 212 to begin pulling blocks from memory 214 to load cryptographic accelerators 1-N with the appropriate input data blocks, executable code, context information, control information, and configuration information. Scheduling module 206 then issues a start directive to cryptographic accelerators 1-N to process the input data blocks. The encrypted or decrypted output data blocks may be pushed to memory 214 via DMA 212. This block based processing continues until a terminating condition is reached, such as the client issuing a stop directive, for example.

In some embodiments, switching between context flows is driven by a dynamic resource allocation policy that is arranged to prioritize active context flows with minimum laxity. The dynamic resource allocation policy attempts to reduce laxity for active context flows in accordance with Minᵢ {Dₙⁱ - (Tₙ + Cₖⁱ)}, where a laxity parameter is calculated as the difference between the real-time deadline and projected completion time for a context flow, based on a current configuration of CPC 210. Scheduling module 206 associates a deadline with each round of cryptographic operations, which is based on a percentage completion applied to rate monotonic calculations for a context flow. Projected completion time is calculated by adding the time delta, based on a configuration profile, to the current time.

As described previously, CCC 220 services multiple context flows on a block basis. Cryptographic accelerators are configured to process an input data block using information from scheduling module 208 stored in memory 214, which is transferred to the appropriate cryptographic accelerator via DMA 212. It is possible that a cryptographic accelerator may process a different block using different cryptographic operations each execution cycle. Consequently, along with the input data block, the cryptographic accelerator may need to be loaded with context information, executable code, context information, control information, and configuration information. Context information may include checkpoint data from previous execution phase needed to make progress in the current execution phase of a communication session. For example, in CBC mode, results from a previous cipher block may be needed for the current execution to make progress. Similarly initialization vectors (IV) may be needed to start the execution of the first cipher block. Configuration information may include the configuration parameters needed for a given execution cycle. Cryptographic accelerators 1-N may be reconfigured according to the performance and design constraints for a given cryptography session. Before the execution for the current phase can proceed, a cryptographic accelerator may be configured with various configuration parameters, such as a context parameter representing the type of cryptographic operation (e.g., encryption/decryption), a key-size (e.g., 56/64/128/192/256), a cryptographic mode (e.g., ECB/CBC/C-CBC/CTR) and type of cryptographic algorithm (e.g., AES/C2/DES/3DES/CSS/DVB-CSA). The control space includes the algorithm definition for a particular set of cryptographic operations. For example, the control space for AES may be represented as cᵢ = Eₖ (cᵢ₋₁ + mᵢ), mᵢ = cᵢ₋₁ + Dₖ(Cᵢ).

As shown in FIG. 2, system 200 may have a system architecture which includes *m* clients sharing the services provided by *n* cryptographic accelerators. There are *2 *n* DMA channels to service the concurrent execution of *n* accelerators, with each cryptographic accelerator having a DMA channel to pull input data-structures from memory 214 and push output data-structures to memory 214. In some embodiments, there may be a single cryptographic accelerator to service multiple clients 1-M. In another embodiment, there may be a separate cryptographic accelerator for each client and/or type of service. In general, system 200 may be implemented to in various combinations of clients and cryptographic accelerators to fulfill a design constraint of *m* > = *n.*

FIG. 3 illustrates a system 300. In some embodiments, system 300 may be representative of, for example, DMA 212 and accompanying structures for use in CPC 210. As shown in FIG. 3, system 300 may comprise a memory 302 connected to a DMA controller 304. DMA controller 304 may be connected to a number of hardware buffers, such as various first-in first-out (FIFO) buffers. For example, DMA controller 304 may be connected to an input FIFO (i-FIFO) 306, a control FIFO (c-FIFO) 308, and an output FIFO (o-FIFO) 310. Although a limited number of elements are shown as part of system 300, it may be appreciated that system 300 may comprise any number of additional elements. The embodiments are not limited in this context.

In some embodiments, system 300 may comprise DMA controller 304. DMA controller 304 may be capable of supporting n simultaneously operating contexts. Input data blocks for a context flow may be retrieved from memory 214 and stored in i-FIFO 306. Executable code or blocks for a cryptographic accelerator and pertaining to a given context flow may be retrieved from memory 214 and stored in c-FIFO 308. Executable code may be loaded from c-FIFO 308 before the cryptographic accelerator begins the execution phase. Next, cipher block units may be retrieved from i-FIFO 306 to keep the corresponding cryptographic accelerator continuously operational. Output data blocks processed by the cryptographic accelerator may be stored in o-FIFO 310. The output data blocks may be moved from o-FIFO 310 to memory 214 once all the computations for the current execution phase have been completed. DMA controller 304 may generate DMA interrupts to notify scheduling module 206 that a watermark for i-FIFO 306 has been reached. The watermark may be programmed into a buffer descriptor that describes the data-set, and interpreted by DMA controller 304. Similarly, addresses for producer buffers (e.g., used to fill i-FIFO 306), consumer buffers (used to fill o-FIFO 310) and control code pertaining to each DMA channel is programmed for the desired operations.

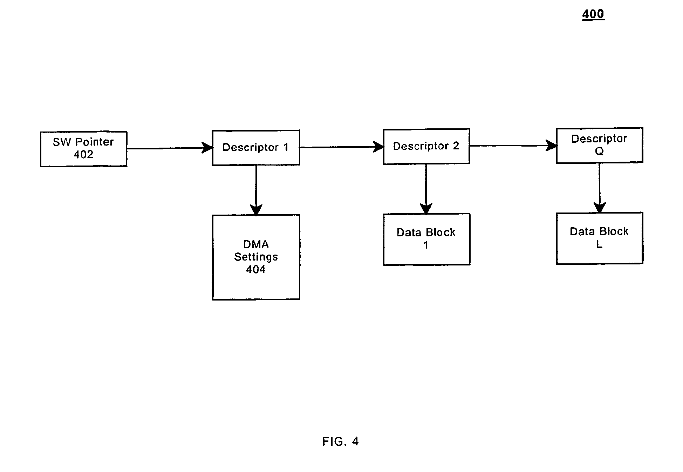

FIG. 4 illustrates a data structure 400. In some embodiments, data structure 400 may be representative of, for example, a data structure for use by system 300. As shown in FIG. 4, data structure 400 may comprise a linked list comprising a software point 402, a set of descriptors 1-Q, a DMA settings data structure 404, and a set of data blocks 1-L. Although a particular set of data structures are shown as part of data structure 400, it may be appreciated that data structure 400 may comprise any number of different or additional data structures designed to support the operational requirements for system 300. The embodiments are not limited in this context.

By assuming the role of data mover, DMA controller 304 may allow the cryptographic accelerators to focus on cryptography processing. In response to each DMA interrupt, scheduling module 206 may assess the ready list of current active context flows for a cryptographic accelerator, and identifies a new workload for an execution cycle. Due to the dynamic properties scheduling module 206, it is possible for a context flow to use different cryptographic accelerators during its duration. Data structure 400 may illustrate a data-structure in memory 214 that may be used to support the data-flow. For each context flow, DMA controller 304 may be programmed to access segmented data blocks 1-L linked together using a link list data-structure in memory 214. The input and output data may be part of the same linked list, or separate lists, depending upon a given implementation. As data blocks 1-L are moved to i-FIFO 306 of DMA controller 304, a corresponding node or link from the linked list is cleaned up and the remaining links are adjusted. Similarly, during the update phase of scheduling module 206, output data-blocks may be extracted from the linked list. The retrieval of output data blocks from o-FIFO 310 of DMA controller 304 may be synchronized to the interrupt events generated by the corresponding input channel. DMA controller 304 has facility to monitor bit-rates for each context flow, on both the input and output channels. This information may override the default bit-rate specification, and scheduling module 206 may use the information during the evaluation phase to make flow-control decisions. The various operational phases of scheduling module 206 may be discussed in more detail below.

In some embodiments, scheduling module 206 maintains data-flow for CPC 210 by continuously cycling through the three phases of operation, to include an update phase, an evaluation phase, and a schedule phase. In response to a DMA interrupt event or non null ready list, scheduling module 206 first discovers the status of the DMA channels and cryptographic accelerators. During the update phase, scheduling module 206 updates the deadline and current time offsets for each context flow on each cryptographic accelerator's ready list. During the evaluation phase, scheduling module 206 evaluates the active context flows to determine the next context flow in need of service. This may be accomplished by computing the laxity of ready context flows. In the schedule phase, scheduling module 206 sets up the buffer descriptor data-structures in memory 214, and programs DMA controller 304 and the corresponding cryptographic accelerator.

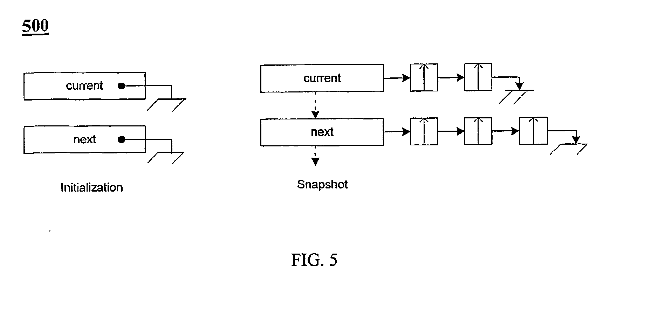

FIG. 5 illustrates a data structure 500. In some embodiments, data structure 500 may be representative of, for example, a data structure for use by system 300. As shown in FIG. 5, data structure 500 may comprise a linked list comprising a current node and a next node during initialization by scheduling module 206, as well as during operations of scheduling module 206. Although a particular set of data structures are shown as part of data structure 500, it may be appreciated that data structure 500 may comprise any number of different or additional data structures designed to support the operational requirements for system 300. The embodiments are not limited in this context.

As shown in FIG. 5, initialization for scheduling module 206 includes setting up the current and next data-structures to null. As clients join or leave CCC 220, the ready list for each cryptographic accelerator is updated accordingly. The deadline calculation is driven by the bit-rate for the context flow, while the projected completion time is calculated by adding the estimated block latency to the current time. This heuristic algorithm resembles a de-generated time-wheel and is based on the notion that the context flow that barely meets its deadline requirements, needs to run now, while others can wait. After events in the current queue are processed, the next data-structure becomes current, while a new next data-structure is created. The scheduling algorithm may be asynchronous in that scheduling module 206 may perform scheduling in response to asynchronous events. When there are no events, scheduling module 206 may remain in standby mode or perform maintenance operations, such as updating statistics, thereby reducing the processing load for processor 216.

Operations for the above systems may be further described with reference to the following figures and accompanying examples. Some of the figures may include programming logic. Although such figures presented herein may include a particular programming logic, it can be appreciated that the programming logic merely provides an example of how the general functionality described herein can be implemented. Further, the given programming logic does not necessarily have to be executed in the order presented unless otherwise indicated. In addition, although the given programming logic may be described herein as being implemented in the above-referenced modules, it can be appreciated that the programming logic may be implemented anywhere within the system and still fall within the scope of the embodiments.

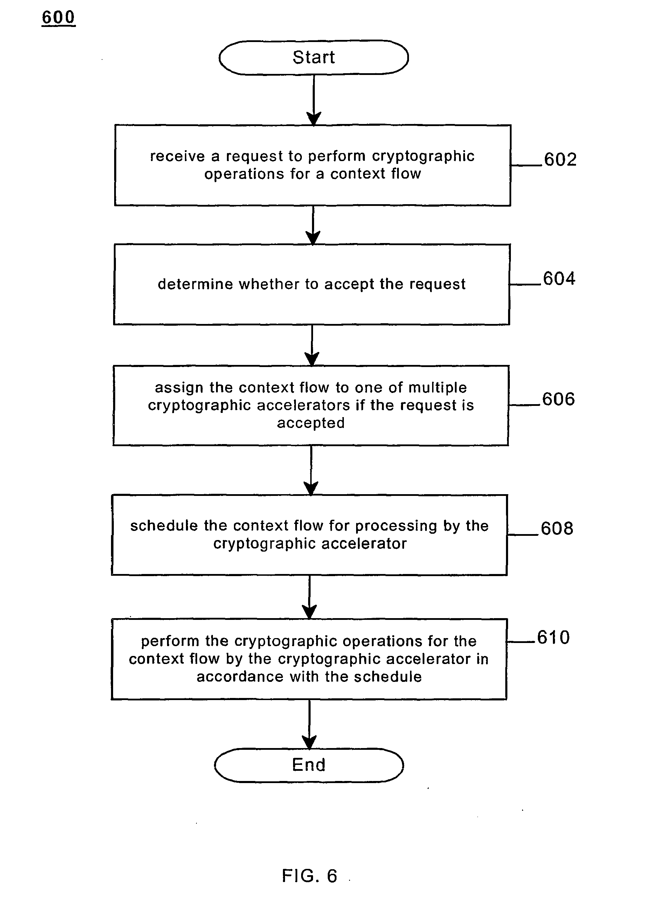

FIG. 6 illustrates a block flow diagram 600. FIG. 6 illustrates a block flow diagram 600 that may be representative of the operations executed by one or more systems described herein, such as systems 100-300. As shown in block flow diagram 600, a request to perform cryptographic operations for a context flow may be received at block 602. A determination as to whether to accept the request may be made at block 604. The context flow may be assigned to one of multiple cryptographic accelerators if the request is accepted at block 606. The context flow may be scheduled for processing by the cryptographic accelerator at block 608. The cryptographic operations for the context flow may be performed by the cryptographic accelerator in accordance with the schedule at block 610.

In some embodiments, the determination at block 604 may be performed by receiving a client identifier for a client associated with the context flow. The client may be authenticated using the client identifier. A set of client resource parameters associated with the client, and a set of system resource parameters associated with the cryptographic accelerators, may be retrieved. The determination of whether to perform the cryptographic operations for the client may be made using the client resource parameters and the system resource parameters.

In some embodiments, the performing at block 610 may be accomplished by generating a block of information for the context flow, with the block of information comprising input data, control information, context information and configuration information. The cryptographic accelerator may be configured in accordance with the control information, context information and configuration information. The input data may be processed using the configured cryptographic accelerator.

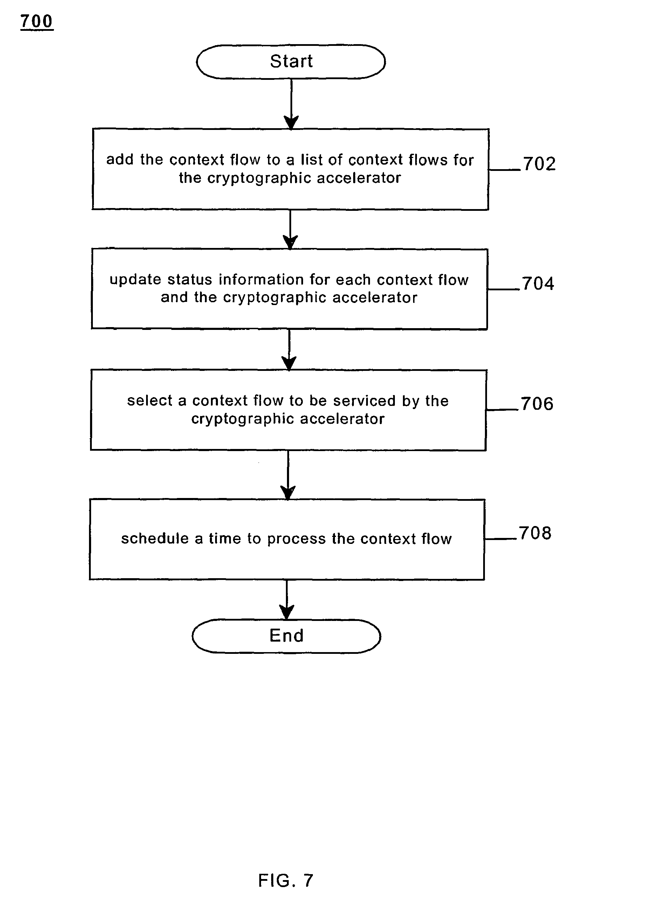

FIG. 7 illustrates a block flow diagram 700. FIG. 7 illustrates a block flow diagram 700 that may be representative of the scheduling operation of block 608 as executed by one or more systems described herein, such as systems 100-300. As shown in block flow diagram 700, the scheduling at block 608 may be performed by adding the context flow to a list of context flows for the cryptographic accelerator at block 702. Status information for each context flow and the cryptographic accelerator may be updated at block 704. Block 704 may correspond to, for example, an update phase for the scheduling algorithm. A context flow may be selected to be serviced by the cryptographic accelerator at block 706. Block 706 may correspond to, for example, an evaluation phase for the scheduling algorithm. A time to process the context flow may be scheduled at block 708. Block 708 may correspond to, for example, a scheduling phase for the scheduling algorithm.

Numerous specific details have been set forth herein to provide a thorough understanding of the embodiments. It will be understood by those skilled in the art, however, that the embodiments may be practiced without these specific details. In other instances, well-known operations, components and circuits have not been described in detail so as not to obscure the embodiments. It can be appreciated that the specific structural and functional details disclosed herein may be representative and do not necessarily limit the scope of the embodiments.

It is worthy to note that any reference to "some embodiments" or "an embodiment" means that a particular feature, structure, or characteristic described in connection with the embodiment is included in at least some embodiments. The appearances of the phrase "in some embodiments" in various places in the specification are not necessarily all referring to the same embodiment.

All or portions of an embodiment may be implemented using an architecture that may vary in accordance with any number of factors, such as desired computational rate, power levels, heat tolerances, processing cycle budget, input data rates, output data rates, memory resources, data bus speeds and other performance constraints. For example, an embodiment may be implemented using software executed by a processor. In another example, an embodiment may be implemented as dedicated hardware, such as a circuit, an application specific integrated circuit (ASIC), Programmable Logic Device (PLD), DSP, and so forth. In yet another example, an embodiment may be implemented by any combination of programmed general-purpose computer components and custom hardware components. The embodiments are not limited in this context.

## Claims

1. A method, comprising:
receiving (602) a request to perform cryptographic operations for one of multiple context flows;
**characterised by**:
determining (604) whether to accept said request;
assigning (606) said context flow on a block-by-block basis to one of multiple cryptographic accelerators (CA) in accordance with a dynamic resource allocation policy if said request is accepted;
scheduling (608) a block of said context flow for processing by an assigned cryptographic accelerator; and
performing (610) said cryptographic operations for said context flow by said assigned cryptographic accelerators in accordance with said schedule.

2. The method of claim 1, wherein said determining (604) comprises:
receiving a client identifier for a client associated with said context flow;
authenticating said client using said client identifier;
retrieving a set of client resource parameters associated with said client and a set of system resource parameters associated with said cryptographic accelerators (CA); and
determining whether to perform said cryptographic operations for said client using said client resource parameters and said system resource parameters.

3. The method of claim 1, wherein said scheduling (608) comprises:
adding (702) said context flow to a list of context flows for said cryptographic accelerator (CA);
updating (704) status information for each context flow and said cryptographic accelerator;
selecting (706) a context flow to be serviced by said cryptographic accelerator; and scheduling (708) a time to process said context flow.

4. The method of claim 3, wherein said selecting (706) said context flow comprises:
generating a laxity parameter for each context flow; and selecting said context flow using said laxity parameters.

5. The method of claim 1, wherein said performing (610) comprises:
generating a block of information for said context flow, said block of information comprising input data, control information, context information and configuration information;
configuring said cryptographic accelerator (CA) with said control information, context information and configuration information; and
processing said input data using said configured cryptographic accelerator.

6. An apparatus, comprising:
a cryptography processing complex (210) arranged to perform cryptographic operations for multiple context flows; and
a cryptography context manager (202) to connect to said cryptography processing complex, said cryptography context manager to manage execution of said multiple context flows by said cryptography processing complex;
**characterised in that** said cryptography processing complex (120) includes multiple cryptographic accelerators, and said cryptography context manager includes a scheduling module to assign each context flow on a block-by-block basis to one respective cryptographic accelerators (CA) in accordance with a dynamic resource allocation policy, and to generate a schedule for each cryptographic accelerator to process said multiple context flows.

7. The apparatus of claim 6, wherein said cryptography context manager (202) includes a client interface module (204) to receive a request from a client to perform cryptographic operations for a context flow, to authenticate said client, and to determine whether said cryptography processing complex (210) is capable of performing said cryptographic operations for said client and said context flow.

8. The apparatus of claim 6, wherein said cryptography context manager (202) includes a cryptography processing complex interface module (208), said cryptography processing complex interface to communicate scheduling information between said cryptography context manager and said cryptography processing complex (210).

9. The apparatus of claim 6, wherein said multiple context flows include a first context flow to be processed in accordance with a first set of cryptography operations, and a second context flow to be processed in accordance with a second set of cryptography operations.

10. The apparatus of claim 9, wherein said cryptography processing complex (210) includes multiple cryptographic accelerators (CA), said multiple cryptographic accelerators to include a first cryptographic accelerator and a second cryptographic accelerator, with said first cryptographic accelerator to perform said first set of cryptographic operations, and said second cryptographic accelerator to perform said second set of cryptographic operations.

11. The apparatus of claim 6, wherein said cryptography processing complex (210) includes a direct memory access controller (212), multiple cryptographic accelerators (CA), and memory (214), with said direct memory access controller to transfer blocks of information between said memory and said cryptographic accelerators, and said cryptographic accelerators to
perfolm cryptographic operations using said blocks.

12. The apparatus of claim 10, wherein said direct memory access controller (212) includes an input data buffer, an input control buffer, and an output data buffer, with said direct memory access controller to retrieve input data blocks for a context flow from said memory (214) to store in said input data buffer, to retrieve executable blocks for a cryptographic accelerator to process said input data blocks from said memory to store in said input control buffer, and to retrieve output data blocks from said cryptographic accelerator to store in said output data buffer.

13. A system, comprising:
at least one client to generate multiple requests for cryptography operations for multiple context flows;
**characterised by**:
a cryptography context controller (202) operatively responsive to said client, said cryptography context controller comprising an apparatus as claimed in any of claims 6 to 12.

14. The system of claim 13, wherein said client comprises one of a conditional access agent, a digital transport control protocol agent, a digital video disc agent, and a local storage agent.

15. The system of claim 13, wherein said system comprises one client, with said one client to send said multiple context flows to said cryptography context controller (202).

16. The system of claim 13, wherein said system comprises multiple clients, with each client to send one or more context flows to said cryptography context controller (202).

17. An article comprising:
a storage medium;
**characterised in that** said storage medium including stored instructions that, when executed by a processor, are operable to determine whether to accept a request to perform cryptographic operations for one of multiple context flows, assign said context flow on a block-by-block basis_to one of multiple cryptographic accelerators (CA) in accordance with a dynamic resource allocation policy if said request is accepted, schedule a block of said context flow for processing by an assigned cryptographic accelerator, and perform said cryptographic operations for said context flow by assigned cryptographic accelerators in accordance with said schedule.

18. The article of claim 17, wherein the stored instructions, when executed by a processor, perform said determination using stored instructions operable to receive a client identifier for a client associated with said context flow, authenticate said client using said client identifier, retrieve a set of client resource parameters associated with said client and a set of system resource parameters associated with said cryptographic accelerators (CA), and determine whether to perform said cryptographic operations for said client using said client resource parameters and said system resource parameters.

19. The article of claim 17, wherein the stored instructions, when executed by a processor, perform said scheduling using stored instructions operable to add said context flow to a list of context flows for said cryptographic accelerator (CA), update status information for each context flow and said cryptographic accelerator, select a context flow to be serviced by said cryptographic accelerator, and schedule a time to process said context flow.

20. The article of claim 19, wherein the stored instructions, when executed by a processor, perform said selecting using stored instructions operable to generate a laxity parameter for each context flow, and select said context flow using said laxity parameters.

21. The article of claim 17, wherein the stored instructions, when executed by a processor, perform said cryptographic operations using stored instruction operable to generate a block of information for said context flow, said block of information comprising input data, control information, context information and configuration information, configure said cryptographic accelerator (CA) with said control information, context information and configuration information, and process said input data using said configured cryptographic accelerator.

## Patentansprüche

1. Verfahren, das folgendes umfasst:
das Empfangen (602) einer Anforderung zum Ausführen kryptografischer Operationen für einen von mehreren Kontextflüssen;
**gekennzeichnet durch**:
das Bestimmen (604), ob die genannte Anforderung akzeptiert wird oder nicht;
das Zuordnen (606) des genannten Kontextflusses Block für Block zu einem einer Mehrzahl von kryptografischen Beschleunigern (CA) gemäß einer dynamischen Ressourcenzuordnungsregel, wenn die genannte Anforderung akzeptiert wird;
das Scheduling (608) eines Blocks des genannten Kontextflusses zur Verarbeitung durch einen zugeordneten kryptografischen Beschleuniger; und
das Ausführen (610) der genannten kryptografischen Operationen für den genannten Kontextfluss **durch** die genannten zugeordneten kryptografischen Beschleuniger gemäß dem genannten Schedule.

2. Verfahren nach Anspruch 1, wobei das genannte Bestimmen (604) folgendes umfasst:
das Empfangen eines Client-Bezeichners für einen dem genannten Kontextfluss zugeordneten Clients;
das Authentifizieren des genannten Client unter Verwendung des genannten Client-Bezeichners;
das Abrufen einer Reihe von Client-Ressourcenparametern, die dem genannten Client zugeordnet sind, und einer Reihe von Systemressourcenparametern, die den genannten kryptografischen Beschleunigern (CA) zugeordnet sind; und
das Bestimmen, ob die genannten kryptografischen Operationen für den genannten Client unter Verwendung der genannten Client-Ressourcenparameter und der genannten Systemressourcenparameter ausgeführt werden sollen.

3. Verfahren nach Anspruch 1, wobei das genannte Scheduling (608) folgendes umfasst:
das Addieren (702) des genannten Kontextflusses zu einer Liste von Kontextflüssen für den genannten kryptografischen Beschleuniger (CA);
das Aktualisieren (704) von Statusinformationen für jeden Kontextfluss und den genannten kryptografischen Beschleuniger;
das Auswählen (706) eines durch den genannten kryptografischen Beschleuniger zu bedienenden Kontextflusses und das Scheduling (708) einer Zeit zur Verarbeitung des genannten Kontextflusses.

4. Verfahren nach Anspruch 3, wobei das genannte Auswählen (706) des genannten Kontextflusses folgendes umfasst:
das Erzeugen eines Laxitätsparameters für jeden Kontextfluss; und das Auswählen des genannten Kontextflusses unter Verwendung der genannten Laxitätsparameter.

5. Verfahren nach Anspruch 1, wobei das genannte Ausführen (610) folgendes umfasst:
das Erzeugen eines Blocks von Informationen für den genannten Kontextfluss, wobei der genannte Block von Informationen Eingangsdaten, Steuerinformationen, Kontextinformationen und Konfigurationsinformationen umfasst;
das Konfigurieren des genannten kryptografischen Beschleunigers (CA) mit den genannten Steuerinformationen, Kontextinformationen und Konfigurationsinformationen; und
das Verarbeiten der genannten Eingangsdaten unter Verwendung des genannten konfigurierten kryptografischen Beschleunigers.

6. Vorrichtung, die folgendes umfasst:
einen Kryptografie-Verarbeitungskomplex (210), der zum Ausführen kryptografischer Operationen für mehrere Kontextflüsse angeordnet ist; und
einen Kryptografie-Kontextmanager (202) zur Verbindung mit dem genannten Kryptografie-Verarbeitungskomplex, wobei der genannte Kryptografie-Kontextmanager dazu dient, die Ausführung der genannten Mehrzahl von Kontextflüssen durch den genannten Kryptografie-Verarbeitungskomplex zu verwalten;
**dadurch gekennzeichnet, dass** der genannte Kryptografie-Verarbeitungskomplex (120) mehrere kryptografische Beschleuniger aufweist, und wobei der genannte Kryptografie-Kontextmanager ein Scheduling-Modul aufweist, um jeden Kontextfluss Block für Block einem entsprechenden kryptografischen Beschleuniger (CA) gemäß einer dynamischen Ressourcenzuordnungsregel zuzuordnen, und um einen Schedule für jeden kryptografischen Beschleuniger zum Verarbeiten der genannten Mehrzahl von Kontextflüssen zu erzeugen.

7. Vorrichtung nach Anspruch 6, wobei der genannte Kryptografie-Kontextmanager (202) ein Client-Schnittstellenmodul (204) zum Empfangen einer Anforderung von einem Client aufweist, um kryptografische Operationen für einen Kontextfluss auszuführen, um den genannten Client zu authentifizieren, und um zu bestimmen, ob der genannte Kryptografie-Verarbeitungskomplex (210) in der Lage ist, die genannten kryptografischen Operationen für den genannten Client und den genannten Kontextfluss auszuführen.

8. Vorrichtung nach Anspruch 6, wobei der genannte Kryptografie-Kontextmanager (202) ein Kryptografie-Verarbeitungskomplex-Schnittstellenmodul (208) aufweist, wobei die genannte Kryptografie-Verarbeitungskomplex-Schnittstelle dazu dient, Scheduling-Informationen zwischen dem genannten Kryptografie-Kontextmanager und dem genannten Kryptografie-Verarbeitungskomplex (210) zu kommunizieren.

9. Vorrichtung nach Anspruch 6, wobei die genannten mehreren Kontextflüsse einen ersten Kontextfluss aufweisen, der gemäß einer ersten Reihe von Kryptografie-Operationen verarbeitet werden soll, und mit einem zweiten Kontextfluss für eine Verarbeitung gemäß einer zweiten Reihe von Kryptografie-Operationen.

10. Vorrichtung nach Anspruch 9, wobei der genannte Kryptografie-Verarbeitungskomplex (210) eine Mehrzahl von kryptografischen Beschleunigern (CA) aufweist, wobei die genannte Mehrzahl von kryptografischen Beschleunigern einen ersten kryptografischen Beschleuniger und einen zweiten kryptografischen Beschleuniger aufweist, wobei der genannte erste kryptografische Beschleuniger die genannte erste Reihe von kryptografischen Operationen ausführt, und wobei der genannte zweite kryptografische Beschleuniger die genannte zweite Reihe von kryptografischen Operationen ausführt.

11. Vorrichtung nach Anspruch 6, wobei der genannte Kryptografie-Verarbeitungskomplex (210) eine Steuereinrichtung mit direktem Speicherzugriff (212), mehrere kryptografische Beschleuniger (CA) und einen Speicher (214) aufweist, wobei die genannte Steuereinrichtung mit direktem Speicherzugriff Informationsblöcke zwischen dem genannten Speicher und den genannten kryptografischen Beschleunigern überträgt, und wobei die genannten kryptografischen Beschleuniger kryptografische Operationen unter Verwendung der genannten Blöcke ausführen.

12. Vorrichtung nach Anspruch 10, wobei die genannte Steuereinrichtung mit direktem Speicherzugriff (212) einen Eingangsdatenpuffer, einen Eingangssteuerpuffer und einen Ausgangsdatenpuffer aufweist, wobei die genannte Steuereinrichtung mit direktem Speicherzugriff Eingangsdatenblöcke für einen Kontextfluss aus dem genannten Speicher (214) abruft, um diese in dem genannten Eingangsdatenpuffer zu speichern, um ausführbare Blöcke für einen kryptografischen Beschleuniger abzurufen, um die genannten Eingangsdatenblöcke aus dem genannten Speicher zu verarbeiten, um diese in dem genannten Eingangssteuerpuffer zu speichern, und um Ausgangsdatenblöcke von dem genannten kryptografischen Beschleuniger abzurufen, um diese in dem genannten Ausgangsdatenpuffer zu speichern.

13. System, das folgendes umfasst:
mindestens einen Client zum Erzeugen mehrerer Anforderungen für kryptografische Operationen für mehrere Kontextflüsse;
**gekennzeichnet durch**:
eine Kryptografie-Kontext-Steuereinrichtung (202), die funktionsfähig auf den genannten Client anspricht, wobei die genannte Kryptografie-Kontext-Steuereinrichtung eine Vorrichtung nach einem der Ansprüche 6 bis 12 umfasst.

14. System nach Anspruch 13, wobei der genannte Client einen Agenten für bedingten Zugriff, einen Agenten für ein digitales Transportsteuerprotokoll, einen DVD-Agenten oder einen lokalen Speicheragenten umfasst.

15. System nach Anspruch 13, wobei das genannte System einen Client umfasst, wobei der genannte eine Client die genannten mehreren Kontextflüsse an die genannte Kryptografie-Kontext-Steuereinrichtung (202) sendet.

16. System nach Anspruch 13, wobei das genannte System mehrere Clients umfasst, wobei jeder Client einen oder mehrere Kontextflüsse an die genannte Kryptografie-Kontext-Steuereinrichtung (202) sendet.

17. Artikel, der folgendes umfasst:
ein Speichermedium;
**dadurch gekennzeichnet, dass** das genannte Speichermedium gespeicherte Befehle aufweist, die bei einer Ausführung durch einen Prozessor so funktionsfähig sind, dass bestimmt werden kann, ob eine Anforderung für die Ausführung kryptografischer Operationen für einen von mehreren Kontextflüssen akzeptiert wird, wobei der genannte Kontextfluss Block für Block einem von mehreren kryptografischen Beschleunigern (CA) gemäß einer dynamischen Ressourcenzuordnungsregel zugeordnet wird, wenn die genannte Anforderung akzeptiert wird, wobei ein Block des genannten Kontextflusses zur Verarbeitung durch einen zugeordneten kryptografischen Beschleuniger geplant wird, und wobei die genannten kryptografischen Operationen für den genannten Kontextfluss durch zugeordnete kryptografische Beschleuniger gemäß dem genannten Plan ausgeführt werden.

18. Artikel nach Anspruch 17, wobei die gespeicherten Befehle, wenn sie durch einen Prozessor ausgeführt werden, die genannte Bestimmung unter Verwendung gespeicherter Befehle ausführen, so funktionsfähig, dass ein Client-Bezeichner für einen dem genannten Kontextfluss zugeordneten Client empfangen werden kann, zum Authentifizieren des genannten Client unter Verwendung des genannten Client-Bezeichners, zum Abrufen einer Reihe von Client-Ressourcenparametern, die dem genannten Client zugeordnet sind, und einer Reihe von Systemressourcenparametern, die den genannten kryptografischen Beschleunigern (CA) zugeordnet sind, und zum Bestimmen, ob die genannten kryptografischen Operationen für den genannten Client unter Verwendung der genannten Client-Ressourcenparameter und der genannten Systemressourcenparameter ausgeführt 'erden sollen.

19. Artikel nach Anspruch 17, wobei die gespeicherten Befehle, wenn sie durch einen Prozessor ausgeführt werden, das genannte Scheduling unter Verwendung gespeicherter Befehle ausführen, die so funktionsfähig sind, dass sie den genannten Kontextfluss einer Liste von Kontextflüssen für den genannten kryptografischen Beschleuniger (CA) hinzufügen, die Statusinformationen für jeden Kontextfluss und den genannten kryptografischen Beschleuniger aktualisieren, einen durch den genannten kryptografischen Beschleuniger zu bedienenden Kontextfluss auswählen, und eine Zeit für die Verarbeitung des genannten Kontextflusses planen.

20. Artikel nach Anspruch 19, wobei die gespeicherten Befehle, wenn sie durch einen Prozessor ausgeführt werden, die genannte Auswahl unter Verwendung gespeicherter Befehle ausführen, die so funktionsfähig sind, dass sie einen Laxitätsparameter für jeden Kontextfluss erzeugen und den genannten Kontextfluss unter Verwendung der genannten Laxitätsparameter auswählen.

21. Artikel nach Anspruch 17, wobei die gespeicherten Befehle, wenn sie durch einen Prozessor ausgeführt werden, die genannten kryptografischen Operationen unter Verwendung gespeicherter Befehle ausführen, die so funktionsfähig sind, dass sie einen Informationsblock für den genannten Kontextfluss erzeugen, wobei der genannte Informationsblock Eingangsdaten, Steuerinformationen, Kontextinformationen und Konfigurationsinformationen umfasst, um den genannten kryptografischen Beschleuniger (CA) mit den genannten Steuerinformationen, Kontextinformationen und Konfigurationsinformationen zu konfigurieren, und um die genannten Eingangsdaten unter Verwendung des genannten konfigurierten kryptografischen Beschleunigers zu verarbeiten.

## Revendications

1. Procédé, comprenant l'étape consistant à :
recevoir (602) une requête pour effectuer des opérations cryptographiques pour l'un de multiples flux de contexte ;
**caractérisé par** les étapes consistant à :
déterminer (604) s'il convient d'accepter cette requête ;
attribuer (606) ledit flux de contexte sur une base bloc par bloc à l'un de multiples accélérateurs cryptographiques (en anglais « cryptographic accelerator » - CA) conformément à une politique d'allocation dynamique des ressources si ladite requête est acceptée ;
programmer (608) un bloc dudit flux de contexte à des fins de traitement par un accélérateur cryptographique attribué ; et
effectuer (610) lesdites opérations cryptographiques pour ledit flux de contexte par lesdits accélérateurs cryptographiques attribués conformément à ladite annexe.

2. Procédé selon la revendication 1, dans lequel ladite détermination (604) comprend les étapes consistant à :
recevoir un identifiant client pour un client associé audit flux de contexte ;
authentifier ledit client en utilisant ledit identifiant client ;
récupérer un ensemble de paramètres de ressources client associé audit client et un ensemble de paramètres de ressources système associé auxdits accélérateurs cryptographiques (CA) ; et
déterminer s'il convient d'effectuer lesdites opérations cryptographiques pour ledit client en utilisant lesdits paramètres de ressources client et lesdits paramètres de ressources système.

3. Procédé selon la revendication 1, dans lequel ladite programmation (608) comprend les étapes consistant à :
ajouter (702) ledit flux de contexte à une liste de flux de contexte pour ledit accélérateur cryptographique (CA) ;
mettre à jour (704) les informations d'état pour chaque flux de contexte et ledit accélérateur cryptographique ;
sélectionner (706) un flux de contexte devant être traité par ledit accélérateur cryptographique ; et programmer (708) un temps pour traiter ledit flux de contexte.

4. Procédé selon la revendication 3, dans lequel ladite sélection (706) dudit flux de contexte comprend les étapes consistant à :
générer un paramètre de laxité pour chaque flux de contexte ; et
sélectionner ledit flux de contexte en utilisant lesdits paramètres de laxité.

5. Procédé selon la revendication 1, dans lequel ladite réalisation (610) comprend les étapes consistant à :
générer un bloc d'informations pour ledit flux de contexte, ledit bloc d'informations comprenant des données d'entrée, des informations de contrôle, des informations de contexte et des informations de configuration ;
configurer ledit accélérateur cryptographique (CA) avec lesdites informations de contrôle, informations de contexte et informations de configuration ; et
traiter lesdites données d'entrée en utilisant ledit accélérateur cryptographique configuré.

6. Appareil, comprenant :
un complexe de traitement de cryptographie (210) agencé pour effectuer des opérations cryptographiques pour de multiples flux de contexte ; et
un gestionnaire de contexte de cryptographie (202) pour se connecter ledit complexe de traitement de cryptographie, ledit gestionnaire de contexte de cryptographie gérant l'exécution desdits multiples flux de contexte par ledit complexe de traitement de cryptographie ;
**caractérisé en ce que** ledit complexe de traitement de cryptographie (120) comprend de multiples accélérateurs cryptographiques, et ledit gestionnaire de contexte de cryptographie comprend un module de programmation pour attribuer chaque flux de contexte sur une base bloc par bloc à un accélérateur cryptographique (CA) respectif conformément à une politique d'allocation dynamique des ressources, et pour générer un calendrier pour chaque accélérateur cryptographique pour traiter lesdits multiples flux de contexte.

7. Appareil selon la revendication 6, dans lequel ledit gestionnaire de contexte de cryptographie (202) comprend un module d'interface client (204) pour recevoir une requête d'un client pour effectuer des opérations cryptographiques pour un flux de contexte, pour authentifier ledit client, et pour déterminer si ledit complexe de traitement de cryptographie (210) est capable d'effectuer lesdites opérations cryptographiques pour ledit client et ledit flux de contexte.

8. Appareil selon la revendication 6, dans lequel ledit gestionnaire de contexte de cryptographie (202) comprend un module d'interface de complexe de traitement de cryptographie (208), ladite interface de complexe de traitement de cryptographie communicant les informations de programmation entre ledit gestionnaire de contexte de cryptographie et ledit complexe de traitement de cryptographie (210).

9. Appareil selon la revendication 6, dans lequel lesdits multiples flux de contexte comprennent un premier flux de contexte à traiter conformément à un premier ensemble d'opérations de cryptographie, et un second flux de contexte à traiter conformément à un second ensemble d'opérations de cryptographie.

10. Appareil selon la revendication 9, dans lequel ledit complexe de traitement de cryptographie (210) comprend de multiples accélérateurs cryptographiques (CA), lesdits multiples accélérateurs cryptographiques comprenant un premier accélérateur cryptographique et un second accélérateur cryptographique, ledit premier accélérateur cryptographique effectuant ledit premier ensemble d'opérations cryptographiques, et ledit second accélérateur cryptographique effectuant ledit second ensemble d'opérations cryptographiques.

11. Appareil selon la revendication 6, dans lequel ledit complexe de traitement de cryptographie (210) comprend un contrôleur d'accès direct à la mémoire (212), de multiples accélérateurs cryptographiques (CA), et la mémoire (214), ledit contrôleur d'accès direct à la mémoire transférant des blocs d'informations entre ladite mémoire et lesdits accélérateurs cryptographiques, lesdits accélérateurs cryptographiques effectuant des opérations cryptographiques en utilisant lesdits blocs.

12. Appareil selon la revendication 10, dans lequel ledit contrôleur d'accès direct à la mémoire (212) comprend une mémoire tampon de données d'entrée, une mémoire tampon de contrôle d'entrée, et une mémoire tampon de données de sorties, ledit contrôleur d'accès direct à la mémoire récupérant des blocs de données d'entrée pour un flux de contexte de ladite mémoire (214) pour les stocker dans ladite mémoire tampon d'entrée de données, récupérant des blocs exécutables pour un accélérateur cryptographique pour traiter lesdits blocs de données d'entrée de ladite mémoire pour les stocker dans ladite mémoire tampon de contrôle d'entrée, et récupérant des blocs de données de sortie dudit accélérateur cryptographique pour les stocker dans ladite mémoire tampon de données de sortie.

13. Système, comprenant :
au moins un client pour générer de multiples requêtes pour des opérations de cryptographie pour de multiples flux de contexte ;
**caractérisé par** :
un contrôleur de contexte de cryptographie (202) réagissant fonctionnellement audit client, ledit contrôleur de contexte de cryptographie comprenant un appareil selon l'une quelconque des revendications 6 à 12.

14. Système selon la revendication 13, dans lequel ledit client comprend l'un d'un agent d'accès conditionnel, d'un agent de protocole de contrôle de transport numérique, d'un agent de disque vidéo numérique et d'un agent de stockage local.

15. Système selon la revendication 13, dans lequel ledit système comprend un client, ledit un client envoyant lesdits multiples flux de contexte audit contrôleur de contexte de cryptographie (202).

16. Système selon la revendication 13, dans lequel ledit système comprend de multiples clients, chaque client envoyant un ou plusieurs flux de contexte audit contrôleur de contexte de cryptographie (202).

17. Article, comprenant :
un support de stockage ;
**caractérisé en ce que** ledit support de stockage, y compris les instructions qui y sont stockées et qui, lorsqu'elles sont exécutées par un processeur, sont utilisables pour déterminer s'il convient d'accepter une requête pour effectuer des opérations cryptographiques pour l'un de multiples flux de contexte, attribue ledit flux contexte sur une base bloc par bloc à l'un de multiples accélérateurs cryptographiques (CA) conformément à une politique d'allocation dynamique des ressources si ladite requête est acceptée, programme un bloc dudit flux de contexte à traiter par un accélérateur cryptographique attribué, et effectue lesdites opérations cryptographiques pour ledit flux de contexte par des accélérateurs cryptographiques attribués conformément à ladite programmation.

18. Article selon la revendication 17, dans lequel les instructions stockées, lorsqu'elles sont exécutées par un processeur, effectuent ladite détermination en utilisant des instructions stockées utilisables pour recevoir un identifiant client pour un client associé audit flux de contexte, authentifient ledit client en utilisant ledit identifiant client, récupèrent un ensemble de paramètres de ressources client associé audit client et un ensemble de paramètres de ressources système associé auxdits accélérateurs cryptographiques (CA), et déterminent s'il convient d'effectuer lesdites opérations cryptographiques pour ledit client en utilisant lesdits paramètres de ressources client et lesdits paramètres de ressources système.

19. Article selon la revendication 17, dans lequel les instructions stockées, lorsqu'elles sont exécutées par un processeur, effectuent ladite programmation en utilisant des instructions stockées utilisables pour ajouter ledit flux de contexte à une liste de flux de contexte pour ledit accélérateur cryptographique (CA), mettent à jour des informations d'état pour chaque flux de contexte et ledit accélérateur cryptographique, sélectionnent un flux de contexte à traiter par ledit accélérateur cryptographique, et programment un temps pour traiter ledit flux de contexte.

20. Article selon la revendication 19, dans lequel les instructions stockées, lorsqu'elles sont exécutées par un processeur, effectuent ladite sélection en utilisant des instructions stockées utilisables pour générer un paramètre de laxité pour chaque flux de contexte, et sélectionnent ledit flux de contexte en utilisant lesdits paramètres de laxité.

21. Article selon la revendication 17, dans lequel les instructions stockées, lorsqu'elles sont exécutées par un processeur, effectuent lesdites opérations cryptographiques en en utilisant des instructions stockées utilisables pour générer un bloc d'informations pour ledit flux de contexte, ledit bloc d'informations comprenant des données d'entrée, des informations de contrôle, des informations de contexte et des informations de configuration, configurent ledit accélérateur cryptographique (CA) avec lesdites informations de contrôle, informations de contexte et informations de configuration, et traitent lesdites données d'entrée en utilisant ledit accélérateur cryptographique.
